# EUROPEAN PATENT APPLICATION

(11) **EP 3 006 498 A1**
(43) Date of publication of application: **13.04.2016**
(21) Application number: 14804355.7
(22) Date of filing: 29.05.2014
(51) Int. Cl.: C08L 9/02, C08K 3/34, C08K 5/54

(54) **NITRILE COPOLYMER RUBBER COMPOSITION, CROSSLINKABLE RUBBER COMPOSITION, AND CROSSLINKED RUBBER**

(30) Priority: 30.05.2013 JP 2013113721
(71) Applicant: Zeon Corporation, Tokyo 100-8246 (JP)
(72) Inventor: EMORI, Nobuyoshi, Tokyo 100-8246 (JP); ARAKAWA, Takanori, Tokyo 100-8246 (JP)
(74) Representative: Beckmann, Claus
(86) International application number: PCT/JP2014/064212
(87) International publication number: WO 2014/192844

(57) **Abstract**

A nitrile copolymer rubber composition containing a nitride copolymer rubber (A) with an iodine value of 20 to 80 and white carbon with a specific surface area of 20 to 48 m²/g (B) is provided. According to the present invention, there is provided a nitrile copolymer rubber composition which is excellent in normal physical properties and which is superior in compression set resistance under high temperature and low temperature conditions.

## Description

### TECHNICAL FIELD

The present invention relates to a nitrile copolymer rubber composition, cross-linkable rubber composition, and cross-linked rubber, more particularly relates to a nitrile copolymer rubber composition which is able to give a cross-linked rubber which is excellent in normal physical properties and further is superior in compression set resistance under high temperature and low temperature conditions and a cross-linkable rubber composition and cross-linked rubber which are obtained using the nitrile copolymer rubber composition.

### BACKGROUND ART

In the past, nitrile rubber (acrylonitrile-butadiene copolymer rubber), taking advantage of its oil resistance, mechanical characteristics, chemical resistance, etc., has been used as a material for hoses, tubes, and other automobile-use rubber parts. Further, hydrogenated nitrile rubber (hydrogenated acrylonitrile-butadiene copolymer rubber) which is obtained by hydrogenating the carbon-carbon double bonds in the polymer main chain of nitrile rubber is further excellent in heat resistance, so is used for belts, hoses, diaphragms, and other rubber parts. Further, due to the recent globalization of economies, nitrile rubber is also being used in high temperature countries such as Southeast Asia, cold regions such as Russia, and other broad ranged countries.

As such a composition of a nitrile rubber, for example, Patent Document 1 discloses a composition containing a hydrogenated nitrile rubber into which white carbon and an organic peroxide have been mixed. In particular, in this Patent Document 1, the object is to improve the heat resistance without impairing the mechanical strength and oil resistance which are inherent properties of the hydrogenated nitrile rubber. As a specific example, the example of using a hydrogenated nitrile rubber (Zetpol 2000) with an extremely low iodine value of 7 or less and mixing white carbon with a specific surface area of 50 m²/g or more into this is disclosed. However, the cross-linked rubber which is obtained by using the composition of a nitrile rubber disclosed in this Patent Document 1 is not sufficient in compression set resistance. When used as a seal material, further improvement of the compression set resistance has been sought.

### PRIOR ART DOCUMENTS

### PATENT DOCUMENTS

Patent Document 1: Japanese Patent Publication No. 9-3246A

### SUMMARY OF THE INVENTION

### PROBLEM TO BE SOLVED BY THE INVENTION

The present invention has as its object the provision of a nitrile copolymer rubber composition which can give a cross-linked rubber which is excellent in normal physical properties and further is superior in compression set resistance under high temperature and low temperature conditions. Further, the present invention has as its object the provision of a cross-linkable rubber composition which is obtained by using such a nitrile copolymer rubber composition and cross-linked rubber obtained by cross-linking this cross-linkable rubber composition.

### MEANS FOR SOLVING THE PROBLEMS

The inventors engaged in intensive research to solve this problem and as a result discovered that
(1) When used as a seal material in a cold region such as Russia, the seal material ends up freezing in a low temperature environment and compression set ends up remaining, so there is the problem that liquid leakage and other problems arise (excellent compression set resistance in low temperature conditions) and
(2) By mixing white carbon with a specific surface area of 20 to 48 m²/g into a nitrile copolymer rubber with an iodine value of 20 to 80 to obtain a rubber composition, a cross-linked rubber which is obtained by cross-linking this rubber composition maintains its normal physical properties excellent while is superior in not only compression set resistance under high temperature condition but also compression set resistance under low temperature condition and
   thereby completed the present invention.

That is, according to the present invention, there is provided a nitrile copolymer rubber composition containing a nitrile copolymer rubber (A) with an iodine value of 20 to 80 and white carbon (B) with a specific surface area of 20 to 48 m²/g.

In the nitrile copolymer rubber composition of the present invention, preferably a content of the white carbon (B) with respect to 100 parts by weight of the nitrile copolymer rubber (A) is 10 to 100 parts by weight.

The nitrile copolymer rubber composition of the present invention preferably further contains a silane coupling agent (C).

In the nitrile copolymer rubber composition of the present invention, preferably the silane coupling agent (C) is a vinyl-based silane coupling agent and/or methacryloxy-based silane coupling agent.

In the nitrile copolymer rubber composition of the present invention, preferably a content of the silane coupling agent (C) with respect to 100 parts by weight of the nitrile copolymer rubber (A) is 0.1 to 5 parts by weight.

Further, according to the present invention, there is provided a cross-linkable rubber composition containing the above nitrile copolymer rubber composition into which a cross-linking agent (D) is mixed.

The cross-linkable rubber composition of the present invention preferably further contains a cross-linking aid (E).

Furthermore, according to the present invention, there is provided a cross-linked rubber obtained by cross-linking the above cross-linkable rubber composition.

### EFFECTS OF THE INVENTION

According to the present invention, it is possible to provide a nitride copolymer rubber composition which can give cross-linked rubber which is excellent in normal physical properties and further is superior in compression set resistance under high temperature and low temperature conditions and a cross-linkable rubber composition which contains the above nitrile copolymer rubber composition and cross-linked rubber which is obtained by cross-linking the cross-linkable rubber composition and which has the above properties.

### DESCRIPTION OF EMBODIMENTS

### Nitrile Copolymer Rubber Composition

A nitrile copolymer rubber composition of the present invention contains a nitrile copolymer rubber (A) with an iodine value of 20 to 80 and white carbon (B) with a specific surface area of 20 to 48 m²/g.

### Nitrile Copolymer Rubber (A)

First, the nitrile copolymer rubber (A) with an iodine value of 20 to 80 used in the present invention will be explained.
The nitrile copolymer rubber (A) with an iodine value of 20 to 80 used in the present invention (below, simply referred to as the "nitrile copolymer rubber (A)") is rubber with an iodine value of 20 to 80 which is obtained by copolymerization of at least an α, β-ethylenically unsaturated nitrile monomer and another monomer which can copolymerize with the same.

The α, β-ethylenically unsaturated nitrile monomer is not particularly limited so long as an α, β-ethylenically unsaturated compound which has a nitrile group. For example, acrylonitrile; α-chloroacrylonitrile, α-bromoacrylonitrile, and other α-halogenoacrylonitrile; methacrylonitrile and other α-alkylacrylonitriles; etc. may be mentioned. Among these as well, acrylonitrile and methacrylonitrile are preferable, while acrylonitrile is more preferable. The α, β-ethylenically unsaturated nitrile monomer may be used alone or as several types combined.

The content of the α, β-ethylenically unsaturated nitrile monomer units is preferably 10 to 60 wt% with respect to the total monomer units, more preferably 15 to 50 wt%, furthermore preferably 20 to 45 wt%. If the content of the α, β-ethylenically unsaturated nitrile monomer units is too small, the obtained cross-linked product is liable to fall in oil resistance, while conversely if too great, it may fall in cold resistance.

The monomer which can copolymerize with the α, β-ethylenically unsaturated nitrile monomer for forming the nitrile copolymer rubber (A) is not particularly limited, but a conjugated diene monomer may be preferably mentioned.

As the conjugated diene monomer, 1,3-butadiene, isoprene, 2,3-dimethyl-1,3-butadiene, 1,3-pentadiene, chloroprene, and other conjugated diene monomers having 4 to 6 carbon atoms are preferable, 1,3-butadiene and isoprene are more preferable, and 1,3-butadiene is particularly preferable. The conjugated diene monomers may be used alone or as several types combined.

The content of the conjugated diene monomer units (including also hydrogenated parts) is preferably 40 to 90 wt% with respect to the total monomer units, more preferably 50 to 85 wt%, furthermore preferably 55 to 80 wt%. By including the conjugated diene monomer units, the obtained cross-linked rubber can be made one which has a rubber elasticity. If the content of the conjugated diene monomer units is too small, the obtained cross-linked rubber is liable to fall in rubber elasticity, while conversely if too large, the heat resistance or chemical resistance stability may be impaired.

Further, the nitrile copolymer rubber (A) used in the present invention may be a copolymer of the α, β-ethylenically unsaturated nitrile monomer and conjugated diene monomer and another copolymerizable monomer. As such another monomer, ethylene, an α-olefin monomer, (meth)acrylic acid alkyl ester monomer (meaning "methacrylic acid alkyl ester monomer and acrylic acid alkyl ester monomer", same below), (meth)acrylic acid alkoxyalkyl ester monomer, aromatic vinyl monomer, fluorine-containing vinyl monomer, etc. may be mentioned.

As the α-olefin monomer, one having 3 to 12 carbon atoms is preferable. For example, propylene, 1-butene, 4-methyl-1-pentene, 1-hexene, 1-octene, etc. may be mentioned.

The (meth)acrylic acid alkyl ester monomer is not particularly limited so long as an ester compound of acrylic acid or methacrylic acid and an alcohol which has an alkyl group. As such a (meth)acrylic acid alkyl ester monomer, methyl (meth)acrylate, ethyl (meth)acrylate, propyl (meth) acrylate, butyl(meth)acrylate, etc. may be mentioned.

The (meth)acrylic acid alkoxyalkyl ester monomer is not particularly limited so long as an ester compound of an acrylic acid or methacrylic acid and an alcohol which has an alkoxyalkyl group. As such a (meth)acrylic acid alkoxyalkyl ester monomer, methoxymethyl (meth)acrylate, methoxyethyl (meth)acrylate, ethoxymethyl (meth)acrylate, ethoxyethyl (meth)acrylate, n-propoxyethyl (meth)acrylate, i-propoxyethyl (meth)acrylate, n-butoxyethyl (meth)acrylate, i-butoxyethyl (meth)acrylate, t-butoxyethyl (meth)acrylate, methoxypropyl (meth)acrylate, methoxybutyl (meth)acrylate, etc. may be mentioned.

As the aromatic vinyl monomer, for example, styrene, α-methylstyrene, vinylpyridine, etc. may be mentioned.

As the fluorine-containing vinyl monomer, for example, fluoroethylvinyl ether, fluoropropylvinyl ether, o-trifluoromethyl styrene, vinyl pentafluorobenzoate, difluoroethylene, tetrafluoroethylene, etc. may be mentioned.

These other copolymerizable monomers may be used as plurality of types together. The content of the units of the other monomers is preferably 50 wt% or less with respect to the total monomer units, more preferably 30 wt% or less, furthermore preferably 10 wt% or less.

The nitrile copolymer rubber (A) used in the present invention has an iodine value of 20 to 80, preferably 25 to 70, more preferably 30 to 60. According to the present invention, by controlling the iodine value of the nitrile copolymer rubber (A) to the above range and mixing into the nitrile copolymer rubber (A) the later explained white carbon (B) with a specific surface area of 20 to 48 m²/g, the obtained cross-linked rubber can be made excellent in normal physical properties and superior in not only compression set resistance under high temperature condition but also compression set resistance under low temperature condition. If the iodine value is too low, the compression set resistance ends up deteriorating both under high temperature and low temperature conditions. On the other hand, if the iodine value is too high, the heat resistance ends up becoming insufficient.

Further, the nitrile copolymer rubber (A) used in the present invention has a polymer Mooney viscosity (ML₂₋₄, 100°C) of preferably 10 to 120, more preferably 30 to 100, furhtermore preferably 40 to 90. If the polymer Mooney viscosity of the nitrile copolymer rubber (A) is too low, the obtained cross-linked rubber is liable to fall in mechanical properties, while conversely if too high, the processability when adding a cross-linking agent to obtain a cross-linkable rubber composition may fall.

The method of production of the nitrile copolymer rubber (A) used in the present invention is not particularly limited, but it is preferable to use an emulsifying agent for emulsion polymerization so as to copolymerize the above-mentioned monomers to prepare a latex of copolymer rubber and to hydrogenate this. At the time of emulsion polymerization, an emulsifying agent, polymerization initiator, molecular weight adjuster, and other normally used polymerization secondary material can be used.

The emulsifying agent is not particularly limited, but, for example, polyoxyethylenealkyl ether, polyoxyethylenealkylphenol ether, polyoxyethylenealkyl ester, polyoxyethylenesorbitanalkyl ester, and other nonionic emulsifying agent; a salt of myristic acid, palmitic acid, oleic acid, linoleic acid, and other fatty acid, sodium dodecylbenzene sulfonate and other alkylbenzene sulfonate, higher alcohol sulfuric ester salt, alkyl sulfosuccinic acid salt, and other anionic emulsifying agent; sulfoester of α, β-unsaturated carboxylic acid, sulfate ester of α, β-unsaturated carboxylic acid, sulfoalkyl arylether, and other copolymerizable emulsifying agent; etc. may be mentioned. The amount of use of the emulsifying agent is preferably 0.1 to 10 parts by weight with respect to 100 parts by weight of the total monomers used for the polymerization.

The polymerization initiator is not particularly limited if a radical initiator, but potassium persulfate, sodium persulfate, ammonium persulfate, potassium perphosphate, hydrogen peroxide, and other inorganic peroxides; t-butyl peroxide, cumen hydroperoxide, p-mentane hydroperoxide, di-t-butyl peroxide, t-butylcumyl peroxide, acetyl peroxide, isobutyryl peroxide, octanoyl peroxide, dibenzoyl peroxide, 3,5,5-trimethylhexanoyl peroxide, t-batyl peroxyisobutyrate, and other organic peroxides; azobisisobutyronitrile, azobis-2,4-dimethyl valeronitrile, azobiscyclohexane carbonitrile, methyl azobisisobutyrate, and other azo compounds; etc. may be mentioned. The polymerization initiator may be used alone or as two types or more combined. As the polymerization initiator, an inorganic or organic peroxide is preferable. When using the peroxide as the polymerization initiator, it may be combined with sodium hydrogen sulfite, ferrous sulfate, and other reducing agents for use as a redox-based polymerization initiator. The amount of use of the polymerization initiator is preferably 0.01 to 2 parts by weight with respect to 100 parts by weight of the total monomers used for the polymerization.

The molecular weight adjuster is not particularly limited, but t-dodecyl mercaptan, n-dodecyl mercaptan, octyl mercaptan, and other mercaptans; carbon tetrachloride, methylene chloride, methylene bromide, and other halogenated hydrocarbon; α-methylstyrene dimer; tetraethylthiuram disulfide, dipentamethylene thiuram disulfide, diisopropyl xantogen disulfide, and other sulfur-containing compounds etc. may be mentioned. These may be used alone or in two or more types combined. Among these as well, mercaptans are preferable, and t-dodecyl mercaptan is more preferable. The amount of use of the molecular weight adjuster is preferably 0.1 to 0.8 parts by weight with respect to 100 parts by weight of the total monomers used for the polymerization.

For the medium of the emulsion polymerization, usually water is used. The amount of water is preferably 80 to 500 parts by weight with respect to 100 parts by weight of the total monomers used for the polymerization.

Further, at the time of emulsion polymerization, further, in accordance with need, a stabilizer, dispersant, pH adjuster, deoxidant, particle size adjuster, and other secondary polymerization material may be used. In the case of using these, the types and amounts of use are also not particularly limited.

Further, the obtained copolymer may be selectively hydrogenated at carbon-carbon double bonds of the conjugated diene monomer units so as to produce the nitrile copolymer rubber (A). Note that the type and amount of hydrogenation catalyst used for hydrogenation, the hydrogenation temperature, etc. may be determined based on known methods corresponding to the iodine value of the nitrile copolymer rubber (A) which is obtained by the hydrogenation.

### White Carbon (B)

The nitrile copolymer rubber composition of the present invention contains, in addition to the above-mentioned nitrile copolymer rubber (A), white carbon (B) with a specific surface area of 20 to 48 m²/g (below, simple referred to as the "white carbon (B)"). In the present invention, by mixing into the above-mentioned nitrile copolymer rubber (A) the white carbon (B) with a specific surface area of 20 to 48 m²/g, it is possible to maintain the normal physical properties excellent when cross-linking the rubber to obtain cross-linked rubber while making not only the compression set resistance under high temperature condition, but also compression set resistance under low temperature condition superior.

The white carbon (B) used in the present invention is not particularly limited so long as a silicic acid (salt) compound (including anhydrous silicic acid (silica)) with a specific surface area of 20 to 48 m²/g, but wet type silica or dry type silica which is obtained by the wet method or dry method etc. using sodium silicate, calcium silicate, magnesium silicate, etc. as materials is preferable.

The white carbon (B) used in the present invention has a specific surface area of 20 to 48 m²/g, preferably 25 to 48 m²/g, more preferably 30 to 48 m²/g. If the specific surface area is too small, the reinforcibility by the white carbon ends up falling and the tensile strength ends up becoming smaller, while if the specific surface area is too large, under both high temperature and low temperature conditions, the compression set resistance ends up deteriorating. Note that the specific surface area of the white carbon (B) can, for example, be measured by the BET method based on ASTM D3037-81.

Further, as a specific example of white carbon (B), product name "Nipsil EL" (made by Toso Silica, BET specific surface area: 44 m²/g) etc. may be mentioned.

In the nitrile copolymer rubber composition of the present invention, the amount of the white carbon (B) is preferably 10 to 100 parts by weight with respect to 100 parts by weight of the nitrile copolymer rubber (A), more preferably 20 to 80 parts by weight, furthermore preferably 30 to 60 parts by weight. By making the amount of the white carbon (B) in the above range, it is possible to enhance the effect due to mixing in the white carbon (B), that is, the effect of maintaining excellent the normal physical properties of the obtained cross-linked rubber while enabling improvement of the compression set resistances under the high temperature and low temperature conditions.

### Silane Coupling Agent (C)

The nitrile copolymer rubber composition of the present invention preferably contains, in addition to the nitrile copolymer rubber (A) and white carbon (B), the silane coupling agent (C). By mixing in the silane coupling agent (C), when made into a cross-linked rubber, the obtained cross-linked rubber can be further improved in normal physical properties (in particular, tensile strength).

The silane coupling agent (C) is not particularly limited, but, for example, an epoxy-based silane coupling agent, vinyl-based silane coupling agent, methacryloxy-based silane coupling agent, amino-based silane coupling agent, mercapto-based silane coupling agent, etc. may be mentioned.

As specific examples of the epoxy-based silane coupling agent, γ-glycidyloxypropyltrimethoxysilane, γ-glycidyloxypropylmethyldiethoxysilane, β-(3,4-epoxycyclohexyl)ethyltrimethoxysilane, etc. may be mentioned.

As specific examples of the vinyl-based silane coupling agent, vinyltrimethoxysilane, vinyltriethoxysilane, vinyltris(2-methoxyethoxy)silane, etc. may be mentioned.

As specific examples of the methacryloxy-based silane coupling agent, γ-(methacryloyloxypropyl)trimethoxysilane, etc. may be mentioned.

As specific examples of the amino-based silane coupling agent, N-β-(aminoethyl)-γ-aminopropyltrimethoxysilane, γ-aminopropyltriethoxysilane, etc. may be mentioned.

As a mercapto-based silane coupling agent, γ-mercaptopropyltrimethoxysilane, etc. may be mentioned.

These may be used alone or as two types or more combined.

Among these as well, from the viewpoint of being able to make the action and effect of the present invention much more remarkable, a vinyl-based silane coupling agent and methacryloxy-based silane coupling agent are preferable, a vinyl-based silane coupling agent is more preferable, and a vinyl tris(2-methoxyethoxy)silane is furthermore preferable.

In the nitrile copolymer rubber composition of the present invention, the amount of the silane coupling agent (C) is preferably 0.1 to 5 parts by weight with respect to 100 parts by weight of the nitrile copolymer rubber (A), more preferably 0.2 to 4 parts by weight, furhtermore preferable 0.5 to 2 parts by weight. By making the amount of the silane coupling agent (C) in the above range, the effect due to mixing in the silane coupling agent (C), that is, the effect of improvement of the normal physical properties of the obtained cross-linked rubber, can be suitably enhanced.

### Cross-Linkable Rubber Composition

The cross-linkable rubber composition of the present invention contains the above mentioned nitrile copolymer rubber composition of the present invention into which a cross-linking agent (D) is mixed.

The cross-linking agent (D) used in the present invention is not particularly limited so long as one which can cross-link the above-mentioned nitrile copolymer rubber (A). A sulfur cross-linking agent, an organic peroxide cross-linking agent or a polyamine cross-linking agent (hexamethylenediamine carbamate or 2,2-bis[4-(4-aminophenoxy)phenyl]propane etc.) etc. may be mentioned, but among these as well, since the effects of the present invention become much more remarkable, an organic peroxide cross-linking agent is preferable.

As the organic peroxide cross-linking agent, a conventionally known one can be used. For example, dicumyl peroxide, cumen hydroperoxide, t-butylcumyl peroxide, p-mentane hydroperoxide, di-t-butyl peroxide, 1,3-bis(t-butylperoxyisopropyl)benzene, 1,4-bis(t-butylperoxyisopropyl)benzene, 1,1-di-t-butylperoxy-3,3-trimethylcyclohexane, 4,4-bis-(t-butyl-peroxy)-n-butyl valerate, 2,5-dimethyl-2,5-di-t-butylperoxyhexane, 2,5-dimethyl-2,5-di-t-butylperoxyhexine-3, 1,1-di-t-butylperoxy-3,5,5-trimethylcyclohexane, p-chlorobenzoylperoxide, t-butylperoxyisopropyl carbonate, t-butylperoxybenzoate, etc. may be mentioned, but 1,3-bis(t-butylperoxyisopropyl)benzene is preferable. Note that these may be used alone or as two types or more combined.

In the nitrile copolymer rubber composition of the present invention, the amount of the cross-linking agent (D) is preferably 0.1 to 20 parts by weight with respect to 100 parts by weight of the nitrile copolymer rubber (A), more preferably 1 to 18 parts by weight, furthermore preferably 2 to 15 parts by weight. If the content of the cross-linking agent (D) is too small, the cross-linking at the time to obtain a cross-linked rubber becomes insufficient and a drop in mechanical strength or increase in compression set is liable to occur. On the other hard, if too large, the elongation may fall.

The cross-linkable rubber composition of the present invention preferably further has a cross-linking aid (E) mixed into it. By mixing in the cross-linking aid (E), the effects of the present invention become much more remarkable.

The cross-linking aid (E) is not particularly limited so long as a compound which can co-cross-link by reaction with a cross-linking agent (D), but a low molecular weight or high molecular weight compound which has several radical reactive unsaturated groups in its molecule is preferable. As specific examples of the cross-linking aid (E), divinylbenzene, divinylnaphthalene and other polyvalent vinyl compounds; triallyl isocyanurate, trimethallyl isocyanurate, and other isocyanurates; triallyl cyanurate and other cyanurates; N,N'-m-phenylene dimaleimide, and other maleimides; diallyl phthalate, diallyl isophthalate, diallyl maleate, diallyl fumarate, diallyl sebacate, triallyl phosphate, and other allyl ester of a polyvalent acid; diethyleneglycol bisallyl carbonate; ethyleneglycol diallyl ether, a triallyl ether of trimethylolpropane, a partial allyl ether of pentaerythrit, and other allyl ethers; allylated novolac, allylated resole resin, and other allyl modified resin; trimethylolpropane trimethacrylate, trimethylolpropane triacrylate, and other tri- to pentafunctional methacrylate compound or tri- to pentafunctional acrylate compound; etc. may be mentioned. These may be used alone or as two types or more combined. Among these as well, since the effects of the present invention become much more remarkable, a tri- to pentafunctional methacrylate or tri- to pentafunctional acrylate compound is preferable, and trimethylolpropanetriacrylate is more preferable.

In the nitrile copolymer rubber composition of the present invention, the amount of the cross-linking aid (E) is preferably 0.5 to 20 parts by weight with respect to 100 parts by weight of the nitrile copolymer rubber (A), more preferably 1 to 15 parts by weight, furthermore preferably 2 to 10 parts by weight. By making the amount of the cross-linking aid (E) in this range, the effects of the present invention become much more remarkable.

Further, the cross-linkable rubber composition of the present invention may contain, in addition to the above ingredients, compounding agents which are normally used in the field of rubber. As such compounding agents, for example, a reinforcing agent or filler other than the white carbon (B), antioxidant, photo stabilizer, scorch preventer, plasticizer, processing aid, slip agent, tackifier, lubricant, flame retardant, acid acceptor, antifungal agent, antistatic agent, coloring agent, cross-linking accelerator, cross-linking retarder, foam agent, etc. may be mentioned. The amounts of these compounding agents are not particularly limited so long as in ranges not impairing the objects and effects of the present invention. Amounts commensurate with the objective of inclusion may be mixed in.

Furthermore, the cross-linkable rubber composition of the present invention may also have mixed in it a rubber other than the above-mentioned nitrile copolymer rubber (A) in a range where the effects of the present invention are not impaired. If mixing in a rubber other than the nitrile copolymer rubber (A), the amount in the cross-linkable rubber composition is preferably 30 parts by weight or less with respect to 100 parts by weight of the nitrile copolymer rubber (A), more preferably 20 parts by weight or less, furthermore preferably 10 parts by weight or less.

The cross-linkable rubber composition of the present invention is prepared by mixing the above ingredients in a preferably non-aqueous system. The method of preparing the cross-linkable rubber composition of the present invention is not limited, but the composition is usually prepared by kneading the ingredients other than the cross-linking agent (D) by a Banbury mixer, internal mixer, kneader, or other mixer by primary kneading, then transferring the mixture to rolls etc., adding the cross-linking agent (D), and kneading them by secondary kneading.

The thus obtained cross-linkable rubber composition of the present invention has a compound Mooney viscosity (ML₁₊₄, 100°C) of preferably 5 to 200, more preferably 10 to 150, furthermore preferably 20 to 100, and is excellent in processability.

### Cross-Linked Rubber

The cross-linked rubber of the present invention is one obtained by cross-linking the above-mentioned cross-linkable rubber composition of the present invention.

The cross-linked rubber of the present invention can be produced by using the cross-linkable rubber composition of the present invention, for example, using a molding machine which corresponds to the desired shape, for example, an extruder, injection molding machine, press, rolls, etc. for molding, heating to cause a cross-linking reaction and thereby fixing the shape as a cross-linked product. In this case, it is possible to mold the rubber, then cross-link it and possible to cross-link it simultaneously with molding. The molding temperature is usually 10 to 200°C, preferably 25 to 120°C. The cross-linking temperature is usually 100 to 200°C, preferably 130 to 190°C, while the cross-linking time is usually 1 minute to 24 hours, preferably 2 minutes to 6 hours.

Further, depending on the shape, size, etc. of the cross-linked rubber, sometimes, even if the surface is cross-linked, the inside part is not sufficiently cross-linked, so it is possible to further heat the rubber for secondary cross-linking.

As the heating method, press heating, steam heating, oven heating, hot air heating, or another general method which is used for cross-linking rubber may be suitably selected.

The thus obtained cross-linked rubber of the present invention is one obtained using the above-mentioned nitrile copolymer rubber composition of the present invention, so is maintained excellent in normal physical properties while is superior in not only compression set resistance under high temperature condition, but also compression set resistance under low temperature condition.

For this reason, the cross-linked rubber of the present invention can be used, taking advantage of the above characteristics, for O-rings, packings, diaphragms, oil seals, shaft seals, bearing seals, wellhead seals, air compressor seals, seals for sealing the chlorofluorocabon or fluorohydrocarbons or carbon dioxide used for cooling apparatuses of air-conditioners or compressors for cooling machines for air-conditioning systems, seals for sealing supercritical carbon dioxide or subcritical carbon dioxide used for washing media for precision washing, seals for roller devices (roller bearings, automobile hub units, automobile water pumps, linear guide devices, ball and screws, etc.), valves and valve seats, BOP (blow out preventers), blatters, and other various sealing members; and intake manifold gaskets attached to connecting parts of intake manifolds and cylinder heads, cylinder head gaskets attached to connecting parts of cylinder blocks and cylinder heads, rocker cover gaskets attached to connecting parts of rocker covers and cylinder heads, oil pan gaskets attached to connecting parts of oil pans and cylinder blocks or transmission cases, gaskets for fuel cell separators attached between a pair of housings sandwiching a unit cell provided with anode, electrolyte plates, and cathodes, gaskets for top covers of hard disk drives, and other various types of gaskets; printing rolls, ironmaking rolls, papermaking rolls, industrial rolls, office equipment rolls, and other various types of rolls; flat belts (film core flat belts, cord flat belts, maltilayer flat belts, single piece flat belts, etc.), V-belts (wrapped V-belts, low edge V-belts, etc.), V-ribbed belts (single V-ribbed belts, double V-ribbed belts, wrapped V-ribbed belts, back surface rubber V-ribbed belts, top cog V-ribbed belts etc.), CVT belts, timing belts, toothed belts, conveyor belts, and other various types of belts; fuel hoses, turbo air hoses, oil hoses, radiator hoses, heater hoses, water hoses, vacuum brake hoses, control hoses, air-conditioner hoses, brake hoses, power steering hoses, air hoses, marine hoses, risers, flowlines, and other various types of hoses; CVJ boots, propeller shaft boots, constant velocity joint boots, rack and pinion boots, and other various types of boots; cushion materials, dynamic dampers, rubber couplings, air springs, vibration proofing materials, and other damping material rubber parts; dust covers, car interior members, tires, covered cables, shoe soles, electromagnetic wave shields, binders for flexible printed circuit boards and other binders, fuel cell separators, and also other broad applications in the fields of cosmetics and pharmaceuticals, fields in contact with food, the electronics field, etc. Among these as well, the cross-linked rubber of the present invention can be suitably used for O-rings, packings, gaskets and other sealing members, can be suitably used as a sealing members which are used in an environment of -10°C or less, and can in particular be suitably used as a sealing members which are used in an environment of -20°C or less.

### EXAMPLES

Below, the present invention will be exampled based on further detailed examples, but the present invention is not limited to these examples. Note that, below, unless particularly indicated, "parts" are based on weight. The testing and evaluation were as follows.

### Normal Physical properties (Elongation, Tensile Stress, and Hardness)

The cross-linkable rubber composition was placed in a vertical 15 cm, horizontal 15 cm, depth 0.2 cm mold and press formed while applying a press pressure of 10 MPa at 170°C for 20 minutes to cross-link by primary cross-linking. Next, the obtained primary cross-linked product was transferred to a gear type oven and secondarily cross-linked at 150°C for 4 hours to obtain sheet-shaped cross-linked rubber. The obtained sheet-shaped cross-linked rubber was punched out to a No. 3 dumbbell shape to prepare a test piece. Next, this test piece was used in accordance with JIS K6251 to measure the tensile strength and elongation and further in accordance with JIS K6253 using a Durometer Hardness Tester (Type A) to measure the hardness.

### Compression Set Test (Test Under High Temperature Condition)

The cross-linkable rubber composition was placed in a diameter 29 mm, height 12.5 mm columnar mold and pressurized at a press pressure of 10 MPa while pressed at 170°C for 20 minutes for primary cross-linking, then the obtained primary cross-linked product was heated in a gear type oven at further conditions of 150°C for 4 hours for secondary cross-linking to thereby obtain columnar shaped cross-linked rubber. Using the obtained columnar shaped cross-linked rubber, in accordance with JIS K6262, the columnar shaped cross-linked rubber was compressed 25% using compression plates. In that state, it was allowed to stand in a 150°C environment for 70 hours, then the compression plates were detached. The thus taken out test piece was allowed to stand in a 23°C environment for 30 minutes, then was measured for compression set. The smaller this value, the better the compression set resistance under high temperature condition.

### Compression Set Test (Test Under Low Temperature Condition)

Using columnar shaped cross-linked rubber which was obtained in the same way as the above, in accordance with JIS K6262, the columnar shaped cross-linked rubber was compressed 25% using compression plates. In that state, it was allowed to stand in a -30°C environment for 24 hours, then the compression plates were detached. The thus taken out test piece was allowed to stand in a -30°C environment for 30 minutes, then was measured for compression set. The smaller this value, the better the compression set resistance under low temperature condition.

### Example 1

Using a Banbury mixer, to 100 parts of a hydrogenated acrylonitrile-butadiene copolymer rubber (A1) (product name "Zetpol 2020", made by Zeon Corporation, acrylonitrile content: 36 wt%, iodine value: 28), 1 part of stearic acid, 40 parts of silica (B1) (product name "Nipsil EL", made by Toso Silica, BET specific surface area: 44 m²/g), 20 parts of tri-2-ethylhexyl trimellitate (product name "ADK Cizer C8", made by Adeka, plasticizer), 1.5 parts of 4,4'-di-(α,α-dimethylbenzyl) diphenylamine (product name "Nocrac CD", made by Ouchi Shinko Chemical Industrial, antiaging agent), 1.5 parts of 2-mercaptobenzoimidazole zinc salt (product name "Nocrac MBZ", made by Ouchi Shinko Chemical Industrial, antiaging agent), 1 part of vinyl tris(2-methoxyethoxy)silane (product name "Dynasilane VTMOEO", made by Evonik Degussa, silane coupling agent (C) (vinyl-based silane coupling agent)), 2 parts of diethyleneglycol, and 4 parts of trimethylolpropane triacrylate (made by Mitsubishi Rayon, cross-linking aid (E)) were added and mixed at 50°C for 5 minutes. Next, the obtained mixture was transferred to 50°C rolls where 8 parts of 1,3-bis(t-butylperoxyisopropylbenzene (product name "Vulcup 40KE", made by Hercules, cross-linking agent (D) (organic peroxide-based cross-linking agent)) was added and kneaded in to obtain a cross-linkable rubber composition.

Then, the obtained cross-linkable rubber composition was evaluated and tested, by the above-mentioned methods, for normal physical properties, compression set test (test under high temperature condition) and compression set test (test under low temperature condition). The results are shown in Table 1.

### Example 2

Except for changing the amount of the cross-linking aid (E) constituted by trimethylolpropane triacrylate from 4 parts to 8 parts, the same procedure was followed as in Example 1 to prepare a cross-linkable rubber composition and similarly evaluate it. The results are shown in Table 1.

### Example 3

Except for using, instead of 100 parts of hydrogenated acrylonitrile-butadiene copolymer rubber (A1) (product name "Zetpol 2020", made by Zeon Corporation, acrylonitrile content: 36 wt%, iodine value: 28), 100 parts of hydrogenated acrylonitrile-butadiene copolymer rubber (A2) (product name "Zetpol 2030L", made by Zeon Corporation, acrylonitrile content: 36 wt%, iodine value: 57), the same procedure was followed as in Example 1 to prepare a cross-linkable rubber composition and similarly evaluate it. The results are shown in Table 1.

### Comparative Example 1

Except for using, instead of 100 parts of hydrogenated acrylonitrile-butadiene copolymer rubber (A1) (product name "Zetpol 2020", made by Zeon Corporation, acrylonitrile content: 36 wt%, iodine value: 28), 100 parts of hydrogenated acrylonitrile-butadiene copolymer rubber (A3) (product name "Zetpol 2000", made by Zeon Corporation, acrylonitrile content: 36 wt%, iodine value: 4), the same procedure was followed as in Example 1 to prepare a cross-linkable rubber composition and similarly evaluate it. The results are shown in Table 1.

### Comparative Example 2

Except for using, instead of 100 parts of hydrogenated acrylonitrile-butadiene copolymer rubber (A1) (product name "Zetpol 2020", made by Zeon Corporation, acrylonitrile content: 36 wt%, iodine value: 28), 100 parts of hydrogenated acrylonitrile-butadiene copolymer rubber (A4) (product name "Zetpol 2010", made by Zeon Corporation, acrylonitrile content: 36 wt%, iodine value: 11), the same procedure was followed as in Example 1 to prepare a cross-linkable rubber composition and similarly evaluate it. The results are shown in Table 1.

### Comparative Example 3

Except for using, instead of 40 parts of silica (B1) (product name "Nipsil EL", made by Toso Silica, BET specific surface area: 44 m²/g), 40 parts of Silica (B2) (product name "Nipsil ER", made by Toso Silica, BET specific surface area: 120 m²/g), the same procedure was followed as in Example 1 to prepare a cross-linkable rubber composition and similarly evaluate it. The results are shown in Table 1.

### Comparative Example 4

Except for using, instead of 40 parts of silica (B1) (product name "Nipsil EL", made by Toso Silica, BET specific surface area: 44 m²/g), 40 parts of silica (B3) (product name "Carplex #1120", made by DSL Japan, BET specific surface area: 109 m²/g), the same procedure was followed as in Example 1 to prepare a cross-linkable rubber composition and similarly evaluate it. The results are shown in Table 1.

### Comparative Example 5

Except for using, instead of 40 parts of silica (B1) (product name "Nipsil EL", made by Toso Silica, BET specific surface area: 44 m²/g), 40 parts of silica (B4) (product name "Nipsil VN-3", made by Toso Silica, BET specific surface area: 210 m²/g), the same procedure was followed as in Example 1 to prepare a cross-linkable rubber composition and similarly evaluate it. The results are shown in Table 1.

Table 1

**Table 1**

| | | | | Example | | | Comparative example | | | | |
|---|---|---|---|---|---|---|---|---|---|---|---|
| | | | | 1 | 2 | 3 | 1 | 2 | 3 | 4 | 5 |
| Formulation of cross-linkable rubber composition | | | | | | | | | | | |
| | Hydrogenated acrylonitrile-butadiene copolymer rubber (A1) (iodine value: 28) | | (parts) | 100 | 100 | | | | 100 | 100 | 100 |
| | Hydrogenated acrylonitrile-butadiene copolymer rubber (A2) (iodine value: 57) | | (parts) | | | 100 | | | | | |
| | Hydrogenated acrylonitrile-butadiene copolymer rubber (A3) (iodine value: 4) | | (parts) | | | | 100 | | | | |
| | Hydrogenated acrylonitrile-butadiene copolymer rubber (A3) (iodine value: 11) | | (parts) | | | | | 100 | | | |
| | Silica (B1) (BET specific surface area: 44 m²/g) | | (parts) | 40 | 40 | 40 | 40 | 40 | | | |
| | Silica (B2) (BET specific surface area: 120 m²/g) | | (parts) | | | | | | 40 | | |
| | Silica (B3) (BET specific surface area: 109 m²/g) | | (parts) | | | | | | | 40 | |
| | Silica (B4) (BET specific surface area: 210 m²/g) | | (parts) | | 1 | | | | | | 40 |
| | Stearic acid | | (parts) | 1 | 1 | 1 | 1 | 1 | 1 | 1 | 1 |
| | Tri-2-ethylhexyl trimellitate | | (parts) | 20 | 20 | 20 | 20 | 20 | 20 | 20 | 20 |
| | 4,4'-di-(α,α- -dimethylbenzyl)diphenylamine | | (parts) | 1.5 | 1.5 | 1.5 | 1.5 | 1.5 | 1.5 | 1.5 | 1.5 |
| | Zinc 2-mercaptobenzoimidazolate | | (parts) | 1.5 | 1.5 | 1.5 | 1.5 | 1.5 | 1.5 | 1.5 | 1.5 |
| | Vinyl tris(2-methoxyethoxy)silane | | (parts) | 1 | 1 | 1 | 1 | 1 | 1 | 1 | 1 |
| | Diethyleneglycol | | (parts) | 2 | 2 | 2 | 2 | 2 | 2 | 2 | 2 |
| | Trimethylolpropane triacrylate | | (parts) | 4 | 8 | 4 | 4 | 4 | 4 | 4 | 4 |
| | 1,3-bis(t-butylperoxyisopropyl)benzene | | (parts) | 8 | 8 | 8 | 8 | 8 | 8 | 8 | 8 |
| Physical properties of cross-linked rubber | | | | | | | | | | | |
| | Normal physical properties | | | | | | | | | | |
| | | Tensile strength | (MPa) | 19.7 | 20.8 | 18.6 | 19.1 | 19.1 | 23.3 | 19.5 | 22.0 |
| | | Elongation | (%) | 340 | 310 | 270 | 520 | 500 | 310 | 370 | 310 |
| | | Hardness | (Duro-A) | 64 | 68 | 66 | 65 | 64 | 75 | 72 | 76 |
| | High temperature compression set (150°C, 70 hours) | | | 13.4 | 12.7 | 10.2 | 24.0 | 22.9 | 15.2 | 21.2 | 19.8 |
| | Low temperature compression set (-30°C, 24 hours) | | (%) | 73.4 | 77.2 | 41.2 | 96.1 | 95.4 | 82.1 | 84.3 | 86.8 |

From Table 1, when using a hydrogenated acrylonitrile-butadiene copolymer rubber with an iodine value of 20 to 80 and combining silica with a BET specific surface area of 20 to 48 m²/g in range with this, the obtained cross-linked rubber is excellent in normal physical properties and further is superior in compression set resistance under both high temperature condition and low temperature condition (Examples 1 to 3).

On the other hand, when using a hydrogenated acrylonitrile-butadiene copolymer rubber with an iodine value of less than 20, the obtained cross-linked rubber became poor in compression set resistance under both high temperature condition and low temperature condition (Comparative Examples 1 and 2).

Furthermore, even when using silica with a BET specific surface area of over 48 m²/g, the obtained cross-linked rubber became poor in compression set resistance under both high temperature condition and low temperature condition (Comparative Examples 3 to 5).

## Claims

1. A nitrile copolymer rubber composition containing a nitrile copolymer rubber (A) with an iodine value of 20 to 80 and white carbon (B) with a specific surface area of 20 to 48 m²/g.

2. The nitrile copolymer rubber composition According to claim 1 wherein a content of the white carbon (B) with respect to 100 parts by weight of the nitrile copolymer rubber (A) is 10 to 100 parts by weight.

3. The nitrile copolymer rubber composition according to claim 1 or 2 further containing a silane coupling agent (C).

4. The nitrile copolymer rubber composition according to claim 3 wherein the silane coupling agent (C) is a vinyl-based silane coupling agent and/or methacryloxy-based silane coupling agent.

5. The nitrile copolymer rubber composition according to claim 3 or 4 wherein a content of the silane coupling agent (C) with respect to 100 parts by weight of the nitrile copolymer rubber (A) is 0.1 to 5 parts by weight.

6. A cross-linkable rubber composition containing the nitrile copolymer rubber composition according to any one of claims 1 to 5 into which a cross-linking agent (D) is mixed.

7. The cross-linkable rubber composition according to claim 6 further containing a cross-linking aid (E).

8. A cross-linked rubber obtained by cross-linking the cross-linkable rubber composition according to claim 6 or 7.
